# EUROPEAN PATENT SPECIFICATION

(11) **EP 2 608 369 B1**
(45) Date of publication and mention of the grant of the patent: **23.03.2022**
(21) Application number: 12198615.2
(22) Date of filing: 20.12.2012
(51) Int. Cl.: H02K 1/17, H02K 7/14

(54) **Overmolded stator assembly lamination stack for a power tool**
Überformter Statoranordnungslaminierungsstapel für ein Elektrowerkzeug
Paquet de tôle bobinée de stator surmoulé destiné à un outil électrique

(30) Priority: 22.12.2011 US 201161579345 P
(43) Date of publication of application: 26.06.2013
(73) Proprietor: Black & Decker Inc., Newark, Delaware 19711 (US)
(72) Inventor: Crosby, Colin, Baltimore, MD Maryland 21224 (US); Osborne, Stephen P., Pikesville, MD Maryland 21208 (US); Zhang, Jiaqi, Cockeysville, MD Maryland 21030 (US); Schroeder, James D, Dallastown, PA Pennsylvania 17313 (US); Smith, David J., Columbia, MD Maryland 21045 (US)
(74) Representative: SBD IPAdmin

(56) References cited:
- EP-A1- 0 798 842
- EP-A2- 1 237 252
- DE-U1-202005 013 840
- JP-A- H07 312 852

## Description

This disclosure relates to arrangement of magnets in the stator of electric motors, particularly for power tools.

In a brushed DC motor construction, the motor stator magnets must be retained within the motor housing on the inner surface of the stator ring or the stator lamination stack. A lamination stack may include a series of laminations with interlocking features. Typically interlocked laminations are pre-stacked at predetermined lengths, e.g., 16mm, 21mm, or 26mm, when provided by industry suppliers. It is difficult to add or remove laminations from a stack of interlocked laminations. Alternatively, loose laminations may be used to provide more flexibility. Conventionally loose laminations have been used for the most part in rotor assemblies, where the laminations can press-fitted onto the rotor shaft. Where loose laminations have been used for the stator assembly in the past, they have been welded together at high temperature to form a solid flux ring. However, this process is expensive and burdensome. What is needed is a mechanism to utilize loose laminations without the cost associated with the welding operation.

EP1237252 discloses an electric motor having a stator comprising magnets.

EP0798842 discloses a permanent magnet motor having all of the features of the pre-characterising portion of claim 1.

JPH07 312852 discloses an electric motor having a stator with over molding. Accordingly , a power tool is provided including a housing, a permanent magnet electric motor as defined in independent claim 1 in the housing, and an output member coupled to the electric motor.

According to the invention, the stator lamination stack defines at least one magnet pocket at each pole, each magnet pocket being contained within the lamination stack distanced from the inner and outer surfaces of the lamination stack. According to the invention, the stator further including at least one permanent magnet embedded within each magnet pocket of each pole.

According to an embodiment, the lamination stack includes inner-pole spacers between the North and the South pole and the longitudinal overmold layer covers the inter-pole spacers. In an embodiment, the inner-pole spacers are recessed with respect to an inner surface of the lamination stack and the longitudinal overmold layer fills in the recessed inner-pole spacers inside the lamination stack. In an embodiment, the inner-pole spacers are recessed with respect to an outer surface of the lamination stack and the longitudinal overmold layer fills in the recessed inner-pole spacers outside the lamination stack.

According to the invention, the longitudinal overmold layer cover substantially all of at least one of the inner or outer surfaces of the stator lamination stack.

According to an embodiment, the overmold resin layer comprises magnetically-conductive material in at least the end caps.

Accordingly, there is provided a permanent magnet electric motor in accordance with claim 1.

The drawings described herein are for illustration purposes only and are not intended to limit the scope of this disclosure in any way.
FIG. 1 is side perspective view of a prior art power tool;
FIG. 2 is cross-sectional view of a stator assembly for a PMDC motor which is not according to the invention having 3 planar magnet segments;
FIG. 3 is cross-sectional view of a stator assembly for a PMDC motor which is not according to the invention having five planar magnets per pole attached to flat sections of a stator housing;
FIG. 4A is a perspective view of a stator housing having magnet pockets for holding magnets;
FIG. 4B is a perspective view of a single lamination in the lamination stack of the stator housing of FIG. 4A;
FIG. 4C is a cross-sectional view of the stator housing of FIG. 4A with the permanent magnets embedded in the magnet pockets;
FIG. 5 is a cross-sectional view of a stator housing having air holes between the magnet pockets;
FIG. 6A is a perspective view of a stator housing having extended magnet pockets;
FIG. 6B is a cross-sectional view of the stator housing of FIG. 6A with the permanent magnets embedded in the magnet pockets;
FIG. 7A is a perspective view of a stator housing having extended magnet pockets;
FIG. 7B is a cross-sectional view of the stator housing of FIG. 7A with the permanent magnets embedded in the magnet pockets;
FIG. 8 is a cross-sectional view of a stator housing having extended magnet pockets;
FIG. 9 is a perspective view of a four-pole stator housing having magnet pockets for holding magnets;
FIGs. 10A is a perspective view of a two-pole stator housing having magnet pockets for holding arcuate magnets;
FIGs. 10B is a perspective view of a four-pole stator housing having magnet pockets for holding arcuate magnets;
FIG. 11 is a perspective view of a stator housing having end a notch at an end cap which is not according to the invention.
FIG. 12A is a perspective view of a stator housing having a notch in an overmold layer according to an example which outside of the scope of the invention but which explains some aspects of the invention.
FIG. 12B is a perspective view of the stator housing of FIG. 12A with the overmold layer being shown transparently; and
FIG. 12C is a cross-sectional view of the stator housing of FIG. 12A.

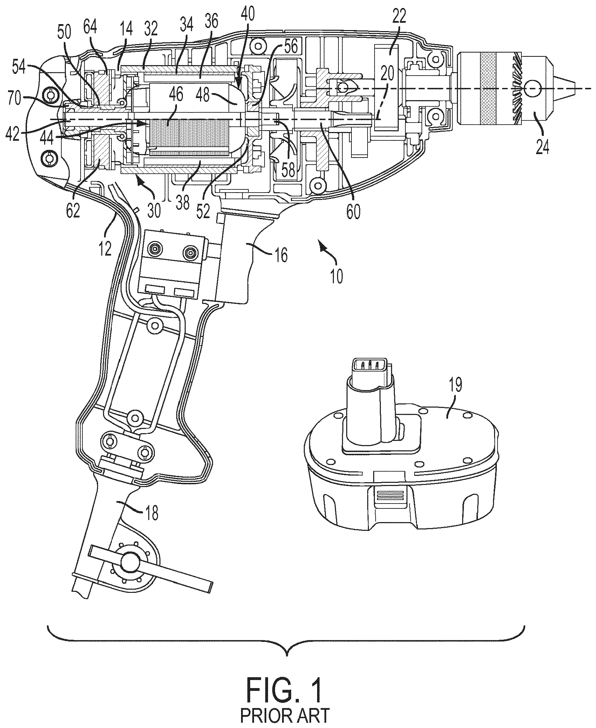

Referring now to FIG. 1, a prior art power tool 10 is shown. The power tool 10 includes a housing 12 which surrounds a motor 14. An actuation member 16 is coupled with the motor and a power source 18. The power source 18 includes either a power cord (AC current) or includes a battery pack 19 (DC current). The motor 14 is coupled with an output member 20 that includes a transmission 22 and a chuck 24. The chuck 24 is operable to retain a tool (not shown).

The motor includes a stator assembly 30. The stator assembly 30 includes a stator housing 32, a stator lamination stack (or a flux ring) 34 and magnets 36. The flux ring 34 is an expandable or split flux ring. An armature 40 includes a shaft 42, a rotor 44 and a commutator 50 coupled with the shaft 42. The rotor 44 includes laminations 46 and windings 48. The motor 14 also includes end plates 52 and 54. End plate 52 includes a front bearing 56 which supports one end of a shaft 42. The shaft 42 is coupled with a pinion 60 that is part of the output member 20. Brushes 62 and 64 are associated with the commutator 50. A rear bearing 70 is also coupled with the end plate 54 to balance rotation of the shaft 42.

The power tool 10 is illustrated as a drill, however, any type of power tool may be used in accordance with this invention. The power tool 10 includes a housing 12 which surrounds a motor 14. An activation member 16 is coupled with the motor and a power source 18. The power source 18 includes either a power cord (AC current) or includes a battery (DC current) (not shown). The motor 14 is coupled with an output member 20 that includes a transmission 22 and a chuck 24. The chuck 24 is operable to retain a tool (not shown).

The designation 34 illustrated in Fig. 1 may be a flux ring, which is made of solid metal and includes a cylindrical inner surface on which the permanent magnets 36 are mounted. Alternatively, and in accordance with embodiments of the invention described herein, designation 34 may be a stator lamination stack made of a series of flat laminations attached to one another. The laminations in the lamination stack 34 may be interlocked. Typically interlocked laminations are provided from an industry supplier with predetermined lengths, e.g., 16mm, 21mm, or 26mm. Alternatively, the laminations may be loose, in which case they are typically welded together at high temperature to form a solid flux ring.

According to the example shown in Fig. 1, a stator housing (or frame) 32 is provided in addition to the lamination stack or flux ring 34. However, it should be understood that the flux ring or the lamination stack 34 may be anchored directly in the tool housing without the use of an additional stator housing 32 in what is commonly referred to as frameless motors. In that case, the flux ring or the lamination stack 34 itself acts as the stator housing.

According to an example, the magnets may be arcuate or flat magnets arranged on the inner surface of the lamination stack 34. As described in U.S. Pat. Nos. 6,522,042; 7,088,024 and 6,983,529, the magnets may anchored to the lamination stack 34 by an overmolding process.

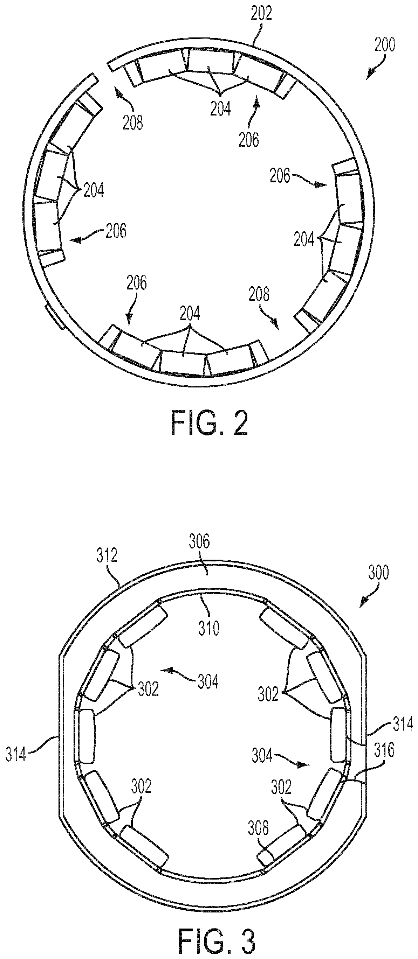

FIG. 2 depicts a cross-sectional view showing an exemplary stator assembly 200 for a PMDC which is not part of the invention having a stator housing 202. Each pole 208 in the stator housing 202 includes two partial poles 206. There are 3 flat magnets 204 per partial pole 206. It should be understood that each pole 208 could be formed by three or more sets of two or more flat magnets 204. It should also be understood that the PMDC motor could have a plurality of north and south poles 208. Although the stator assembly 200 in Fig. 2 appears to be a flux can, the same arrangement may be utilized in a lamination stack.

FIG. 3 shows an exemplary stator assembly 300 for a PMDC motor which is not part of the invention and that includes five smaller flat magnets 302 for each of the poles 304 (north and south poles). Stator housing 306 illustratively is a lamination stack having flat portions 308 (only one of which is identified in FIG. 3 with the reference number 308) in its inner surface 310 to which the flat magnets 302 are mounted. Outer surface 312 of the stator housing 306 illustratively is arcuate except for two opposed flats 314 centrally located over the center flat magnet 302 of the flat magnets 302 for the poles 304. These two opposed flats 314 extend across the respective center flat magnet 302 of the respective pole 304 and partially across each of the two flat magnets 302 adjacent opposed sides of each center flat magnet 302. As such, the thickness of the stator housing 306 is thinner adjacent the center flat magnets 302 of each pole 304 and thicker adjacent the outer flat magnets 302 of each pole 304. This provides the increased flux density at the outer flat magnets 302 where it is most needed and yet allows for reduction in the thickness of steel (saving both weight and material) at the center flat magnets 302 where having such increased flux density is less important.

It should be noted that the two stator assemblies discussed above are merely for illustration purposes. Examples and an embodiment of the invention discussed hereinafter can be applied to any stator assembly with permanent magnets mounted therein.

Typically in motor assemblies described above, a physical (i.e., mechanical) air gap is provided between the outer surface of the rotor assembly and the inner surface of the stator assembly. This air gap accounts for tolerances, i.e., the permissible limit of variations in the dimension or size, associated with the stator and rotor assemblies. In a typical stator assembly (for example, those shown in Figs. 2 and 3), the stator lamination stack may, for example, have a tolerance of approximately ± 0.1 mm due to minor variations in the radius of its inner periphery. The magnets may also have tolerances of, for example, approximately ± 0.05 mm due to small variations in their heights and/or widths. In addition, as previously discussed, the permanent magnets in the stator assembly may be fixed to the stator housing via an adhesive or overmolded to the stator housing by a plastic resin. The adhesive material and/or the overmolded resin material are difficult to apply uniformly and may therefore further increase the overall tolerance of the stator assembly by, for example, approximately ± 0.05 mm to ± 0.15 mm. Thus, in the stator assemblies shown in Figs. 2 and 3, the overall tolerance level of ± 0.2 mm or more is typical. It should be noted that the rotor assembly, albeit not discussed herein, has its own tolerance levels that should be taken into account as well.

While the mechanical air gap between the rotor and stator assemblies is needed to account for their respective tolerances, air has a relatively low magnetic permeability and reduces the overall flux of the stator assembly applied to the rotor assembly. In addition, in motors where magnets are overmolded, the overmoded resin further increases the distance between the magnets and the rotor. The overmolded resin therefore further affects the overall flux of the stator assembly applied to the rotor. In an exemplary conventional power tool motor assembly with overmolded magnets, the overall distance taken up by air gap and the overmold layer combined was measured to be between 0.93 mm to 1.45 mm. This distance, which is known as the "magnetic air gap," refers to the space between the magnets and the rotor taken up by non-magnetically-conductive material such as air, adhesive, resin, etc.

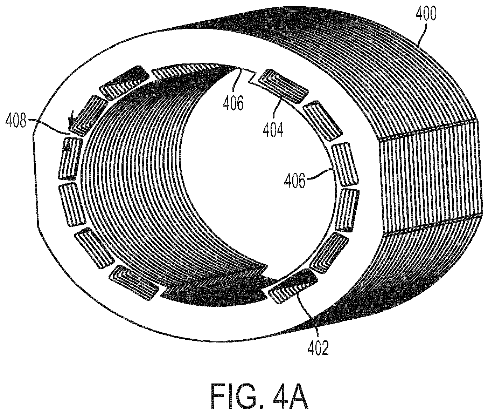

In order to minimize the magnetic air gap between the magnets and the rotor assmbly, an embedded magnet design is provided. As shown in the perspective view of Fig. 4A, a stator housing 400 (in this case in the form of a lamination stack) is provided with magnet pockets 402 to securely hold and enclose the permanent magnets. In this example, the stator housing 400 is a two-pole stator in which each pole includes six magnet pockets 402 for holding permanent magnets. As discussed further below, this embedded design reduces the air gap between the stator housing 400 and the rotor housing (not shown) to increase the flux density.

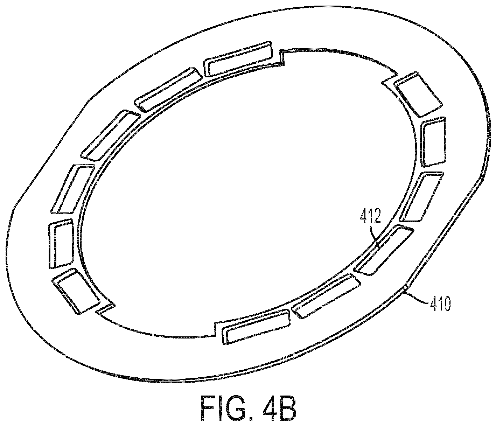

Fig. 4B shows a single lamination 410 of the lamination stack 400. The lamination 410 includes pockets 412. The lamination stack 400 includes multiple identically-shaped laminations 410 arranged in parallel. The pockets 412 of all laminations 410 align to form magnet pockets 402 for holding the magnets.

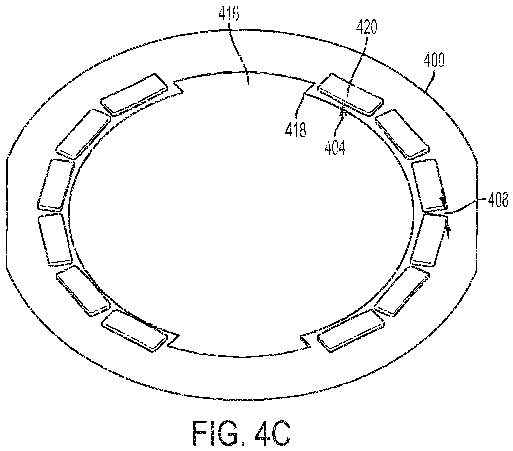

Fig. 4C shows a cross-sectional view of the stator housing lamination stack 400 with the magnets 420 embedded therein. The magnets 420 fit form-fittingly inside the magnet pockets 402 of the lamination stack 400 to securely hold the magnets in place without using any adhesive and/or overmold resin. In some embodiments, some form of adhesive may be provided to better secure the magnets 420 inside the magnet pockets 402; however, the use of adhesive in such instances would be minimal.

In the embedded magnet design according to the example, the magnetic flux applied from the stator assembly to the rotor assembly is improved for several reasons. First, in this design, a magnetically-conductive section 404 of the lamination stack 400 separates the magnets 420 from the rotor assembly. Unlike air, the magnetically-conductive section 404 is highly permeable and therefore improves the overall magnetic flux of the stator assembly 400. Also, the embedded design according to this embodiment eliminates or minimizes the use of any adhesive or overmold to secure the magnets 420 to the stator assembly 400. This further removes another barrier from the path of the magnetic flux. Moreover, since the tolerances associated with the magnets 420 and the adhesive discussed above are effectively eliminated, the total tolerance of the stator assembly can be drastically reduced. In an exemplary embodiment, the total tolerance level for the stator assembly may be reduced from ±0.2 mm for comparable conventional designs to ±0.1 mm or less for the embedded design. The lower tolerance allows for a smaller mechanical air gap between the rotor assembly and the stator assembly. The reduction in the mechanical air gap in turn, combined with the elimination or reduction in the adhesive and/or overmold layer between the magnets and the rotor assembly, substantially decreases the length of the overall magnetic air gap, thus improving the overall magnetic flux applied from the stator assembly to the rotor assembly.

It was found by the inventors that the embedded magnet design described herein, allows for substantial reduction in the magnetic air gap. According to an embodiment, the total magnetic air gap between the stator lamination stack and the rotor may be reduced from 0.93 to 1.45 mm in conventional non-embedded (i.e., surface-mounted) magnet motors to approximately 0.70 mm or less in the embedded design. In one embodiment, the total magnetic flux / magnet volume (k-Max/mm³), as measured from the rotor assembly, is increased by approximately 49% to 56% in the embedded design as compared to conventional non-embedded (i.e., surface-mounted) magnet motors, given the same size/grade magnets. Accordingly, in order to obtain comparable power output levels as conventional surface-mounted magnet motors, smaller magnets may be utilized in the stator assembly. It was found by the inventors that to obtain similar output levels as the conventional surface-mounted magnet motors, the embedded magnet design according to this embodiment reduced the total amount of magnetic material used by 30% to 40%. This may translate to substantial cost-saving given the high cost of rare earth material.

It should be noted that the embedded design according to this example provides other advantages in addition to improvements in the magnetic flux density. For example, since the embedded design provides a smoother surface 406 than conventional stator assemblies, the cogging effect of the stator assemblies associated with the unevenness of the magnets in conventional designs is reduced. Moreover, the dimensional flexibility of the laminated magnet pockets 402 makes it possible to mix and match different grade magnets with minor variations in thickness or width as long as the magnets fit inside the magnet pockets 402.

Furthermore, as described in Black & Decker's Application No. 13/112,136, filed May 20, 2011, the outer magnets may be desirably thicker than the inner magnets within each pole to provide higher demagnetization resistance at the pole tips. Alternatively, the outer magnets may be thinner than the inner magnets, but made of higher grade magnetic material to still provide higher demagnetization resistance at the pole tips. Accordingly, in an example, the magnet pockets 402 within each pole may be provided with different widths and/or thickness levels. In particular, the two outer magnet pockets 402 within each pole may have difference widths and/or thickness levels than the inner magnet pockets to accommodate the varying magnet thickness at the pole tips.

It should be noted that while the exemplary stator housing shown in these figures is a lamination stack, the present design is not limited to a lamination stack and the teachings of this disclosure may be applied to a flux ring or other types of stator assemblies as well.

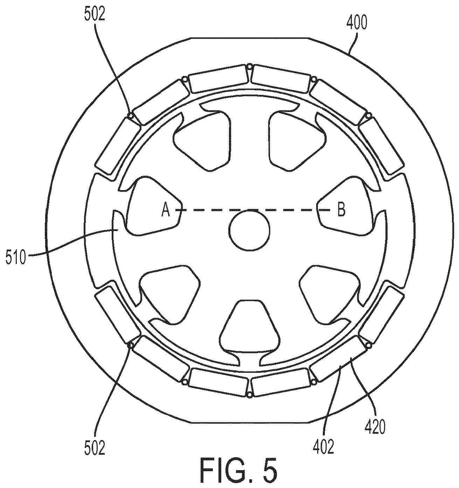

A further improvement to the example described above is discussed herein. According to an example, while the conductive wall 404 between the magnets 420 and the rotor assembly increases the magnetic flux density at the rotor, the magnetically-conductive spacers 408 conversely allow for some unwanted leakage of the magnetic flux. Accordingly, in an embodiment of the invention as shown in Fig. 5, air holes 502 may be introduced between adjacent magnet pockets 402 of the stator assembly 400. The air holes 502 may be configured to minimize leakage of the flux path between the magnets 420. Similarly, the magnet pockets 402 may be shaped (particularly around the edges of the pockets 402) to minimize the conductive path through the magnetically-conductive spacers 408 between the adjacent magnets 420. For example, the outer edges of magnet pockets 402 may be rounded or otherwise extended to create some air pocket between the magnet 420 and the magnetically-conductive spacers 408, thereby minimizing the width of the spacers 408.

Referring back to Fig. 4C, each pole of the stator housing 400 is defined by edges 418 on the surface 406. Inter-pole spacers 416 are provided on the surface 406 between the respective edges 418 of the poles. The edges 418 and the inter-pole spacers 416 may be shaped to optimize the flux path from the magnets 420 in each pole towards the rotor assembly (not shown).

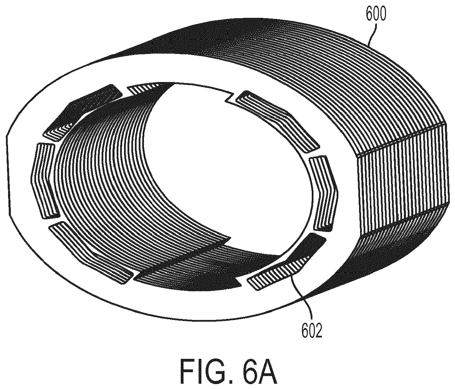

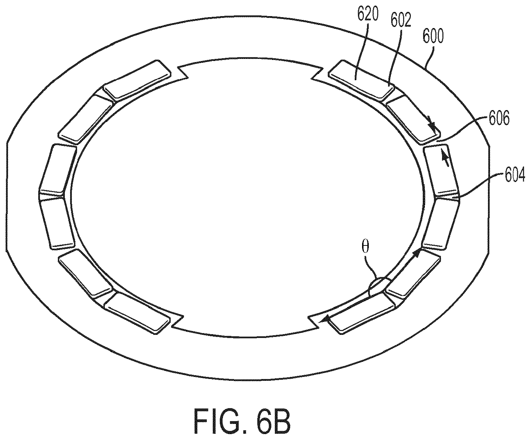

According to an alternative and/or further example, as shown in Figs. 6A and 6B, a stator housing 600 (in this case lamination stack 600) may be provided with magnet pockets 602 configured to accommodated two magnets 620. In this embodiment, each magnet pocket 602 includes two rectangular-shaped portions connected at an angle θ° with each portion holding a magnet 620, such that the magnets 620 housed in the magnet pocket 602 are generally perpendicular to the outer surface of the rotor assembly (not shown). In this example, the stator housing 600 is a two-pole stator, where each pole includes three magnet pockets 602. While adjacent magnet pockets 602 are separated by a conductive spacer 606, the magnets 620 within each magnet pocket 602 are separated via an air pocket 604 formed at the connection points of the rectangular-shaped portions. Similarly to the air holes 502 in Fig. 5, the air pockets 604 in this embodiment help increase the magnetic flux applied to the rotor by reducing leakage of the flux path.

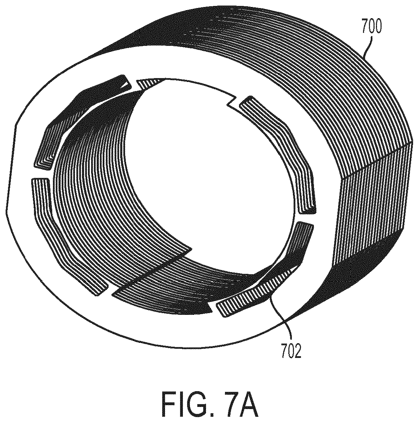

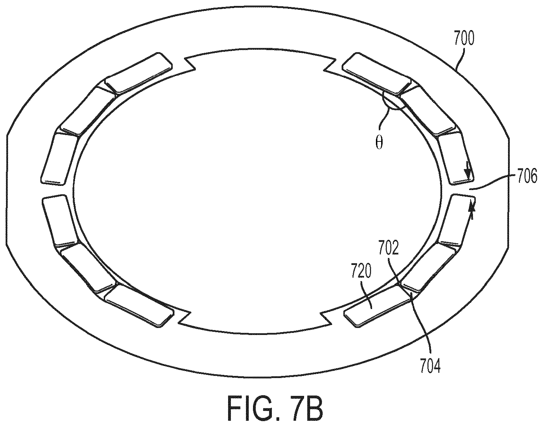

Figs. 7A and 7B illustrate yet another example, in which a stator housing (in this case lamination stack 700) is a two-pole stator, with each pole having two magnet pocket 702 and each magnet pocket 702 housing three embedded magnets 720. In this example, each magnet pocket 702 is made up of three rectangular-shaped portions connected side-by-side at an angle θ° such that the magnets 720 housed in the magnet pocket 702 are generally perpendicular to the outer surface of the rotor assembly (not shown). The two adjacent magnet pockets 702 within each pole are separated by a conductive spacer 706. The magnets 720 within each magnet pocket 702 are separated via air gaps 704, which improve the magnetic flux at applied to the rotor even further.

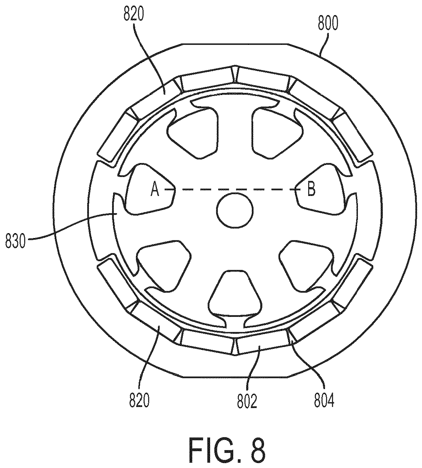

Fig. 8 illustrates a cross-sectional view of yet another example in which the stator housing 800 employs no conductive spacers between the magnets 820 within each pole. In this embodiment, each pole includes one extended magnet pocket 802 which houses six magnet 820. The magnets 820 within each magnet pocket 802 are separated by air gaps 804. It was found by the inventors that this arrangement increases the effective flux measured at the plane AB of the rotor assembly 830 by about 8% (compared to the arrangement shown in Fig. 4A).

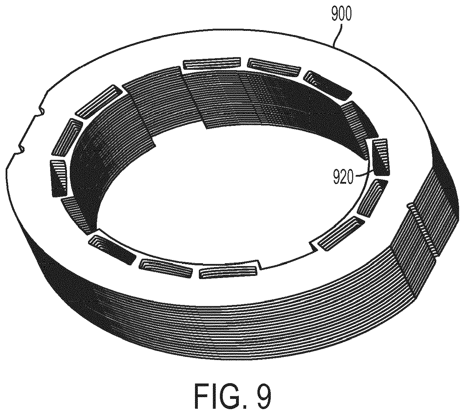

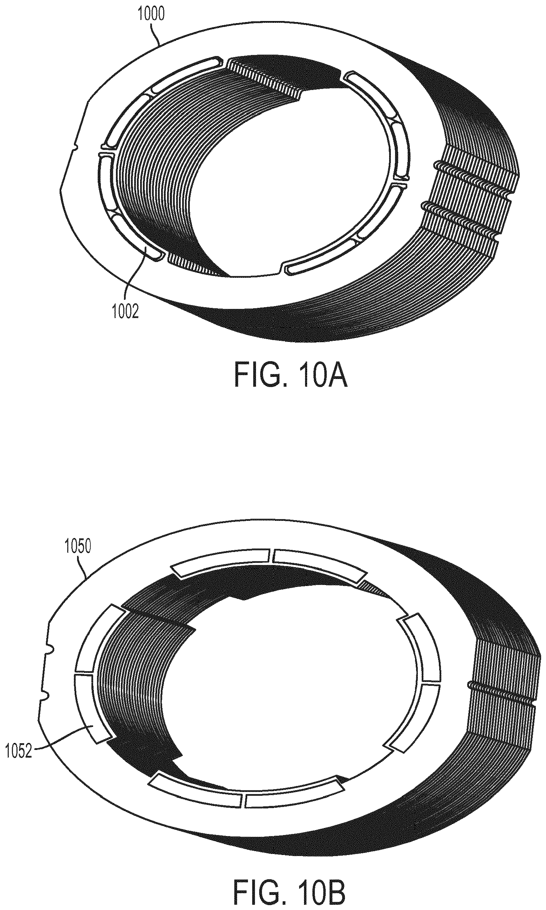

It should be understood that while the examples above were discussed with references to two-pole stators, the embedded magnet concept of this disclosure can be applied to a stator with any number of poles. Fig. 9, for example, illustrates four-pole stator housing 900 having embedded magnets 920. Furthermore, while the embedded magnets discussed herein are flat magnets, it should be understood that magnets of any shape or form can be employed. Figs. 10A and 10B respectively depict a two-pole stator housing 1000 and a four-pole stator housing 1050 having embedded arcuate magnets 1002, 1052.

A second aspect of the example is discussed herein. In a stator assembly, in order to identify the polarity of the stator, a polarity keying feature such as a notch is typically provided in the stator housing. The placement of the notch for polarity keying is important for proper alignment of the rotor inside the stator housing as well as proper assembly of the stator housing inside the power tool. The notch may, for example, designate the center of North pole or the South pole for power tool that are bias-neutral (such as impact drivers). In other products that are forward-biased (i.e., the motor is more likely to move in the forward direction than in the reverse direction, such as drills), the notch may be off-center with respect to the pole so that the magnetic flux is biased for forward rotor rotation. Typically, a corresponding projection is provided in the tool housing to fit into the notch when the stator is placed inside the tool housing. This helps ensure proper alignment of the stator within the power tool housing.

If the stator housing is a flux ring, the notch may be removed from the ring using a machining or punching operation, or using another common material removal operation. The ring may alternatively be pre-assembled with the notch, for example, via a powder-metal or a similar process. The notch in this case may be, for example, 2mm to 4mm in depth. The notch may then be filled with plastic material.

If the stator housing is a lamination stack instead of a flux ring, as discussed above with respect to the first aspect of the invention, removing the notch becomes more complicated. In this case, the notch would have to be removed from multiple laminations at the end of the stack, but not the other laminations within the stack. The laminations are manufactured using a stamping tool configured to stamp an identical layout (e.g., via a stamping die) on all the laminations. Providing the notch on the end of the lamination stack would require a different stamping tool with a different stamping die to be dedicated just to the end laminations with the notch. Also, even though the more advanced stamping tools are configurable to add or remove features from a layout, adding and removing the notch feature for the notched laminations is time consuming and complicates the process. Furthermore, as previously discussed, it may be necessary to place the notch in different locations based on the product, i.e., for forward-bias keying for tools such as drills. Thus, different sets of end laminations with the notches at different locations may need to be stamped. The notched laminations must then be matched up with the appropriate lamination stack. This entire process is expensive and burdensome.

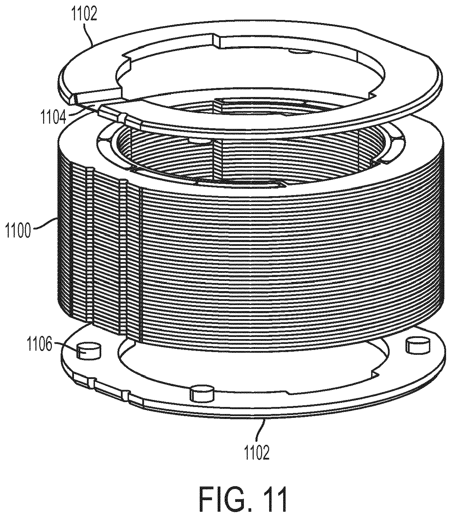

Accordingly, in an example which is not part of the invention shown in Fig. 11, the stator housing lamination stack 1100 may be provided with end cap 1102 having a keying feature 1104 (also referred to as identification feature 1104) for identifying stator polarity keying. The keying feature may be, e.g., a notch or a projection, although a notch is preferred. The end cap 1102 may be placed at one or both ends of the lamination stack 1100. The end caps 1102 may be made of plastic material formed with the notch 1104. The plastic end caps 1102 may be attached to the stator housing 1100 via an adhesive or by insertion of projections 1106 into corresponding holes (not shown) in the laminations.

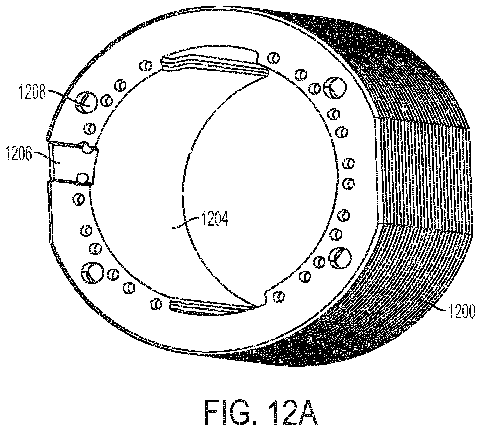

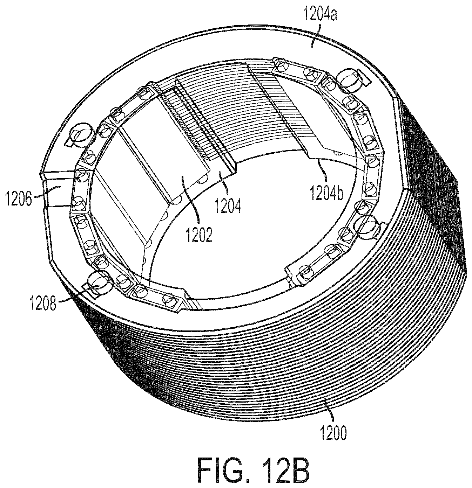

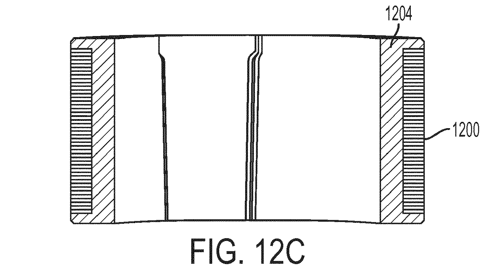

Figs. 12A - 12C depict an example which is not part of the invention. In this embodiment, the stator lamination stack 1200 is overmolded by an overmold layer 1204. The overmold 1204 can be used to securely hold the magnets (in a non-embedded stator housing design) to the inner surface of the stator housing 1200. The details of overmolding the inner surface of the stator assembly to secure the magnets are provided in U.S. Pat. Nos. 6,522,042; 7,088,024 and 6,983,529. According to this embodiment, the improved overmold 1204, in addition to covering the inner surface of the stator lamination stack 1200, extends beyond the ends of the lamination stack 1204 to laterally and integrally includes two ends caps 1204a and 1204b covering the two ends of the stator lamination stack 1200, as shown in Fig. 12A. Fig. 12B shows the same stator lamination stack 1200 as Fig. 12A, but the overmold 1204 depicted transparently to reveal the arrangement of permanent magnets 1202 on the inner surface of the lamination stack 1200 under the overmold 1204. Fig. 12C depicts a cross-sectional view of the overmold 1204.

According to this embodiment, the overmolded end cap 1204a is provided with a keying feature 1206 (also referred to as identification feature 1206) for identifying the polarity of the stator housing, as shown in Figs. 12A and 12B. The keying feature in this embodiment may be a notch recessed in the surface of the end cap 1204a. Alternatively, the notch may be a projection. The keying feature 1206, which in this figure is a notch, may be constructed by adding a lip corresponding to the notch at the bottom of the mold tool. When the molding material flows under the stator housing 1200 in the molding machine (the stator housing 1200 is held up in the mold tool by a plurality of legs corresponding to the holes 1208), the notch is formed as the keying feature 1206 in the overmold end cap 1204a along with the holes 1208.

According to an embodiment, different mold tools may be needed for molding the keying features (e.g., notches) at different locations. However, since mold tools are far cheaper than lamination tools, the overall cost of manufacturing is drastically reduced. According to another embodiment, the protrusion in the mold tool may be movably adjustable to achieve the desired location of the notch 1206 on the stator assembly in the same mold tool.

According to an example, the power tool housing may be provided with a lip corresponding to the keying feature 1104 (Fig. 11) and/or 1206 (Fig. 12). When the motor is placed in the power tool during the assembly process, the lip fits form-fittingly into the keying feature of the stator housing. This helps ensure proper alignment of the motor within the power tool. It should be understood that if the keying feature is a projection, a corresponding recess may be provided in the power tool rather than a lip.

It should be understood that while this arrangement is discussed with respect to a conventional motor assembly with surface-mounted magnets (i.e., where magnets are not embedded inside magnet pockets of the stator housing), the overmolded end caps of this embodiment including the keying feature 1206 may be applied to a stator housing having embedded magnets (i.e., as discussed with reference to Figs. 4A-10B) as defined by the invention.

In another embodiment comprising an exemplary two pole stator housing where the magnets are embedded inside magnet pockets with North and South poles, it may be desirable to overmold only the end caps and the portion covering the inter-pole spacer. According to the invention, the overmolding happens without overmolding the inner surface of the stator housing over covering the pole magnets. An alternative according to the invention is to overmold the outer surface of the stator housing. The keying feature is formed in this embodiment in the end cap.

Another aspect of the example outside of the scope of the invention is discussed herein still with reference to Figs. 12A-12C. As previously discussed, the lamination in the lamination stack may be interlocked laminations. Typically interlocked laminations are pre-stacked at predetermined lengths, e.g., 16mm, 21mm, or 26mm, when provided by industry suppliers. It is difficult to add or remove laminations from a stack of interlocked laminations. Alternatively, in accordance with the invention, loose laminations are provided. Conventionally loose laminations have been used for the most part in rotor assemblies, where the laminations can press-fitted onto the rotor shaft. Where loose laminations have been used for the stator assembly in the past, they have been welded together at high temperature to form a solid flux ring.

According to an example outside of the scope of the invention, as shown in Figs. 12A-12C, the stator housing 1200 is made up of a stack of loose laminations overmolded at the two ends by the overmold layer 1204 to be firmly held together. The overmold 1204 includes an overmold layer covering the insider surface of the lamination stack, including the magnets 1202 and/or the inner-pole spacers 416, and two overmolded end caps extending laterally from the overmold layer to cover the two ends of the lamination stack 1200. The inner overmold layer covers all or part of the innersurface of the lamination stack, but it extends from one end of the lamination stack to the other end. The overmold 1204 therefore holds the stack of loose laminations together. Overmolding the ends of the lamination stack 1200 also provides high impact resistance and thus further improves the structural integrity of the stator assembly. Fig. 12C provides a cross-sectional view of the stator housing 1200 with the overmold 1204 holding the laminations together.

Although the above-discussed example relates to a motor assembly with surface-mounted magnets (i.e., where magnets are not embedded inside magnet pockets of the stator housing), this, according to the invention, is applied to a stator housing made of loose laminations and having embedded magnets. Specifically, the resin overmold layer includes end caps and also covers the area between the North and South poles to connect the end caps. However, the overmold layer does not cover the poles. The overmold layer thus holds the lamination stack of the stator housing securely together without effecting the magnetic flux of the stator housing. In an alternatively embodiment, the overmold layer can cover an outer surface of the stator housing.

According to a further embodiment of the invention, the overmold layer discussed above can include a resin compound including magnetic material. The concept of using an overmold magnetic resin to cover the inside surface of the stator housing in order to improve magnetic flux is discussed in Black & Decker's Application No. 13,112,141, filed May 20, 2011. The improvement according to this embodiment utilizes a magnetic resin compound to cover the inner surface as well as the ends of the lamination stack 1200. This arrangement is advantageous because the non-magnetic overmold resin does not efficiently carry magnetic flux, but the end cap portion of the overmold resin increases the overall length of the stator assembly. In an exemplary stator assembly, the overmold end caps increase the length of the stator by 1.5mm on each end (addition of 3mm to the total length of the stator housing). Thus, if it is desired to keep the total length of the stator housing unchanged, a lesser number of laminations need to be used to make up for the addition of the overmold at the ends of the lamination stack. This of course further reduces the magnetic flux. According to this embodiment of the invention, using a magnetic resin compound in the overmold material allows for the total length of the stator housing to remain unchanged without sacrificing magnetic flux of the assembly. In other words, the magnetism of the overmold at the ends of the lamination stack makes up for the lower number of laminations in the lamination stack. The overmold material according to this embodiment can include a magnetic compound, such as iron powder, ferrite powder, or rare-earth material powder, added to the plastic resin prior to overmolding the lamination stack.

## Claims

1. A permanent magnet electric motor comprising:
a rotor (44) arranged rotatably inside a stator (1200);
the stator (1200) with at least a North pole and a South pole, wherein the stator (1200) comprises a lamination stack having a plurality of loose laminations;
wherein the stator lamination stack (1200) defines at least one magnet pocket (402) at each pole, each magnet pocket (402) being contained within the lamination stack distanced from the inner and outer surfaces of the lamination stack, the stator (1200) further including at least one permanent magnet (420) embedded within each magnet pocket (402) of each pole;
**characterised in that** the loose laminations are being held together via an overmolded resin (1204), the overmolded resin (1204) comprising a longitudinal overmold layer covering at least a portion of at least one of an inner or outer surfaces of the lamination stack (1200) without covering the poles, and two end cap portions extending laterally from the ends of the longitudinal overmold layer (1204) are integrally included in the longitudinal overmold layer (1204) to firmly cover ends of the lamination stack (1200) .

2. The motor of claim 1, wherein the lamination stack comprises inner-pole spacers (416) between the North and the South pole and the longitudinal overmold layer (1204) covers the inter-pole spacers (416).

3. The motor of claim 2, wherein the inner-pole spacers (416) are recessed with respect to an inner surface of the lamination stack and the longitudinal overmold layer (1204) fills in the recessed inner-pole spacers (414) inside the lamination stack.

4. The motor of claim 2, wherein the inner-pole spacers (416) are recessed with respect to an outer surface of the lamination stack and the longitudinal overmold layer (1204) fills in the recessed inner-pole spacers (414) outside the lamination stack.

5. The motor of claim 1, wherein the longitudinal overmold layer (1204) cover substantially all of at least one of the inner or outer surfaces of the stator lamination stack.

6. The motor of claim 1, wherein the overmold resin layer (1204) comprises magnetically-conductive material in at least the end caps.

7. A power tool comprising:
a housing;
a permanent magnet electric motor as claimed in any one of claimed 1 to 6 in the housing; and
an output member coupled to the electric motor.

## Patentansprüche

1. Dauermagnetelektromotor, der umfasst:
einen Rotor (44), der drehbar innerhalb eines Stators (1200) eingerichtet ist;
wobei der Stator (1200) mindestens einen Nordpol und einen Südpol aufweist, wobei der Stator (1200) ein Blechpaket umfasst, das eine Vielzahl loser Bleche aufweist;
wobei das Statorblechpaket (1200) mindestens eine Magnettasche (402) an jedem Pol definiert, wobei jede Magnettasche (402) innerhalb des Blechstapels, von der inneren und der äußeren Oberfläche des Blechstapels entfernt, enthalten ist, wobei der Stator (1200) weiter mindestens einen Dauermagnet (420), der innerhalb jeder Magnettasche (402) jedes Pols eingebettet ist, beinhaltet;
**dadurch gekennzeichnet, dass** die losen Bleche über ein umspritztes Harz (1204) zusammengehalten sind, wobei das umspritzte Harz (1204) eine Längsumspritzungsschicht umfasst, die mindestens einen Abschnitt mindestens einer inneren oder einer äußeren Oberfläche des Blechstapels (1200) abdeckt, ohne die Pole abzudecken, und zwei Endkappenabschnitte, die sich seitlich von den Enden der Längsumspritzungsschicht (1204) erstrecken, integral in der Längsumspritzungsschicht (1204) beinhaltet sind, um Enden des Blechstapels (1200) fest abzudecken.

2. Motor nach Anspruch 1, wobei der Blechstapel Innenpol-Abstandshalter (416) zwischen dem Nord- und dem Südpol umfasst, und die Längsumspritzungsschicht (1204) die Abstandhalter zwischen Polen (416) abdeckt.

3. Motor nach Anspruch 2, wobei die Innenpol-Abstandshalter (416) bezüglich einer Innenoberfläche des Blechstapels vertieft sind, und die Längsumspritzungsschicht (1204) die vertieften Abstandhalter zwischen Polen (416) innerhalb des Blechstapels ausfüllt.

4. Motor nach Anspruch 2, wobei die Innenpol-Abstandshalter (416) bezüglich einer Außenoberfläche des Blechstapels vertieft sind, und die Längsumspritzungsschicht (1204) die vertieften Abstandhalter zwischen Polen (416) außerhalb des Blechstapels ausfüllt.

5. Motor nach Anspruch 1, wobei die Längsumspritzungsschicht (1204) im Wesentlichen die gesamte mindestens eine der inneren oder der äußeren Oberfläche des Statorblechstapels abdeckt.

6. Motor nach Anspruch 1, wobei die Längsumspritzungsschicht (1204) magnetisch leitendes Material mindestens in den Endkappen umfasst.

7. Elektrowerkzeug, das umfasst:
ein Gehäuse,
einen Dauermagnetelektromotor nach einem der Ansprüche 1 bis 6 in dem Gehäuse; und
ein Ausgangselement, das mit dem Elektromotor gekoppelt ist.

## Revendications

1. Moteur électrique à aimants permanents comprenant :
un rotor (44) agencé de manière rotative à l'intérieur d'un stator (1200) ;
le stator (1200) avec au moins un pôle Nord et un pôle Sud, dans lequel le stator (1200) comprend un empilement de tôles présentant une pluralité de tôles lâches ;
dans lequel la pile de tôles de stator (1200) définit au moins une poche magnétique (402) à chaque pôle, chaque poche magnétique (402) étant contenue dans la pile de tôles à distance des surfaces intérieure et extérieure de la pile de tôles, le stator (1200) incluant en outre au moins un aimant permanent (420) incorporé dans chaque poche magnétique (402) de chaque pôle ;
**caractérisé en ce que** les tôles lâches sont maintenues ensemble via une résine surmoulée (1204), la résine surmoulée (1204) comprenant une couche de surmoulage longitudinale recouvrant au moins une partie d'au moins une des surfaces intérieure ou extérieure de l'empilement de tôles (1200) sans recouvrir les pôles, et deux parties de capuchon d'extrémité s'étendant latéralement depuis les extrémités de la couche de surmoulage longitudinale (1204) sont intégralement incluses dans la couche de surmoulage longitudinale (1204) pour recouvrir fermement des extrémités de l'empilement de tôles (1200).

2. Moteur selon la revendication 1, dans lequel l'empilement de tôles comprend des éléments d'espacement de pôles intérieurs (416) entre le pôle Nord et le pôle Sud et la couche de surmoulage longitudinale (1204) recouvre les éléments d'espacement interpôles (416).

3. Moteur selon la revendication 2, dans lequel les éléments d'espacement de pôles intérieurs (416) sont en retrait par rapport à une surface intérieure de l'empilement de tôles et la couche de surmoulage longitudinale (1204) remplit les éléments d'espacement de pôles intérieurs en retrait (416) à l'intérieur de l'empilement de tôles.

4. Moteur selon la revendication 2, dans lequel les éléments d'espacement de pôles intérieurs (416) sont en retrait par rapport à une surface extérieure de l'empilement de tôles et la couche de surmoulage longitudinale (1204) remplit les éléments d'espacement de pôles intérieurs en retrait (416) à l'extérieur de l'empilement de tôles.

5. Moteur selon la revendication 1, dans lequel la couche de surmoulage longitudinale (1204) recouvre sensiblement la totalité d'au moins une des surfaces intérieure ou extérieure de l'empilement de tôles de stator.

6. Moteur selon la revendication 1, dans lequel la couche de résine surmoulée (1204) comprend un matériau magnétiquement conducteur dans au moins les capuchons d'extrémité.

7. Outil électrique comprenant :
un boîtier ;
un moteur électrique à aimants permanents selon l'une quelconque des revendications 1 à 6 dans le boîtier ; et
un élément de sortie couplé au moteur électrique.
